# EUROPEAN PATENT APPLICATION

(11) **EP 2 680 340 A1**
(43) Date of publication of application: **01.01.2014**
(21) Application number: 12187955.5
(22) Date of filing: 10.10.2012
(51) Int. Cl.: H01M 2/16, H01G 9/02, H01G 9/035, H01M 2/14

(54) **Membrane**

(30) Priority: 25.06.2012 CN 201210208308
(71) Applicant: Hou, Dong, Nankai District Anhuali Tianjin (CN); Yang, Chih-Wei, Nankai District Anhuali Tianjin (CN)
(72) Inventor: HOU, Dong, 17-6-101 ANHUALI (CN)
(74) Representative: von Kreisler Selting Werner

(57) **Abstract**

A membrane includes a base material and a glued fixture. The base material has a plurality of pores, and is selected from a fiber fabric film, a blended fabric film and a non-fabric film. The glued fixture has a polymer material and a plurality of inorganic materials. The inorganic materials are glued on the pores by the polymer material to form a plurality of microporous structures.

## Description

### BACKGROUND OF THE INVENTION

### Field of Invention

The present invention relates to a membrane and, in particular, to a membrane applied to a supercapacitor.

### Related Art

The supercapacitor is an electric double layer capacitor, which has higher specific power, larger charge cycle, and broader operation temperature. Thus, it has potential in various applications such as mobile communication, information technology, electric vehicle, aeronautics, military and the likes.

The supercapacitor mainly includes two electrodes, a membrane, and an electrolyte. The two electrodes and membrane are all disposed in the electrolyte. According to the types of the electrolyte, the supercapacitor is divided into the water system and organic system. The membrane is a very important component for the electric double layer physical power source such as supercapacitor, aluminum electrolytic capacitor, and etc. The performance of the membrane can directly determine the properties of the electric double layer capacitor, such as the capacity, resistance, leakage current, charge cycle, charging-discharging voltage, charging-discharging current, and etc. In other words, the manufacturing and material of the membrane are the foundation of the entire product and also the key for determining the performance of the electric double layer physical power source.

Currently, the most popular membrane is the cellulose paper membrane. Otherwise, some manufacturers also use fiber film or PP/PE microporous film as the membrane material. China patent No. CN101267028 discloses a polyolefin capacitor membrane after sulfonation modifying for improving the hydrophilicity of the membrane surface. Besides, China publication application No. CN101694812 also discloses a process for preparing a porous fiber membrane which utilizes an electrospinning process to prepare a polyvinylidene fluoride porous fiber membrane and then utilizes a method of grafting and polymerizing low-temperature plasma with maleic anhydride to improve hydrophily of a fiber surface of the porous fiber membrane. However, there is no membrane that is made of inorganic materials.

Therefore, it is an important subject to use the inorganic material and embedded it into the base material for fabricating a compact membrane with multiple pores, so as to improve the thermo-stability and flame retardance, thereby providing a supercapacitor with excellent dielectric property.

### SUMMARY OF THE INVENTION

In view of the foregoing subject, an objective of the present invention is to provide a membrane with good porosity formed by embedding the inorganic material into a base material, thereby establishing a channel with almost no resistance and improving the thermo-stability and flame retardance so as to enhance the dielectric property of the supercapacitor or electric double layer capacitor.

To achieve the above objective, the present invention discloses a membrane comprising a base material and a glued fixture. The base material has a plurality of pores and is selected from a fiber fabric film, a blended fabric film and a non-fabric film. The glued fixture has a polymer material and a plurality of inorganic materials. The inorganic materials are glued on the pores by the polymer material to form a plurality of microporous structures.

In one embodiment, the inorganic material is selected from aluminum oxide micro-powder, silicon oxide micro-powder, zirconium oxide micro-powder, magnesium oxide micro-powder, calcium oxide micro-powder, lithium oxide micro-powder, and their combinations.

In one embodiment, the polymer material is selected from PFA, PVDF, PMMA, PC, PP, PE, PS, and their combinations.

In one embodiment, the material of the base material comprises PET, PI, PP, PE, or nylon polymer.

In one embodiment, the diameter of the inorganic material is between 0.1 nm and 5 µm.

In one embodiment, the polymer material and a solvent form an emulsion solution, and the polymer material is 0.5% to 40% of the emulsion solution.

In one embodiment, the inorganic material is 0.1% to 60% of the glued fixture.

In one embodiment, the glued fixture is embedded into the base material by immersing, coating, printing, compressing, or casting.

In one embodiment, the membrane is applied to a supercapacitor, an aluminum electrolytic capacitor, an electric double layer capacitor, or an electric double layer hybrid supercapacitor.

As mentioned above, in the membrane of the invention, the glued fixture containing inorganic material is embedded into the pores of the base material by immersing or coating, so that the base material can be configured with a plurality of compact microporous structures. The membrane of the invention has better porosity. When the membrane is applied to a supercapacitor or an electric double layer capacitor, it is possible to provide a channel with almost no resistance for the anions and cations in the electrolyte and improve the thermo-stability and flame retardance of the membrane. In addition, the membrane embedded by the inorganic material has higher safety and can provide superior dielectric property to the supercapacitor or electric double layer capacitor.

### BRIEF DESCRIPTION OF THE DRAWINGS

The invention will become more fully understood from the detailed description and accompanying drawings, which are given for illustration only, and thus are not limitative of the present invention, and wherein:

FIG. 1 is a schematic diagram of a membrane according to a preferred embodiment of the invention;

FIG. 2 is a graph showing the charging cycle test result of a 1.3F button supercapacitor utilizing the membrane of the invention;

FIG. 3 is an AC resistance diagram of a 1.3F button supercapacitor utilizing the membrane of the invention; and

FIG. 4 is a blank AC resistance diagram of different membranes of the invention in different electrolytes.

### DETAILED DESCRIPTION OF THE INVENTION

The present invention will be apparent from the following detailed description, which proceeds with reference to the accompanying drawings, wherein the same references relate to the same elements.

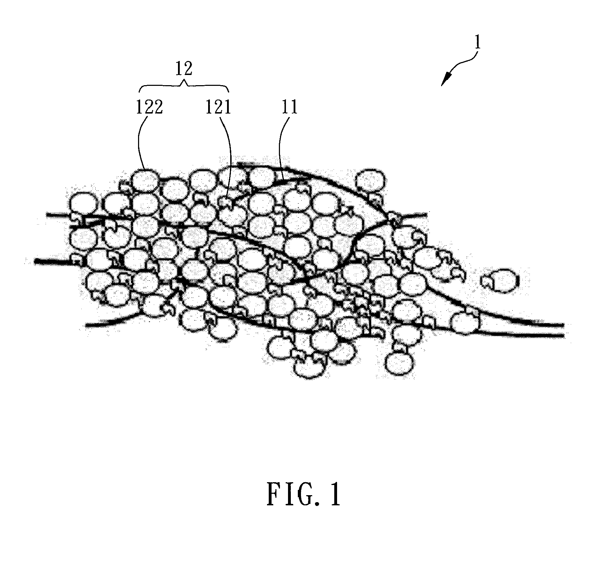

FIG. 1 is a schematic diagram of a membrane according to a preferred embodiment of the invention. The membrane of the invention can be applied to a supercapacitor, an aluminum electrolytic capacitor, an electric double layer capacitor, or an electric double layer hybrid supercapacitor. The membrane is the isolation material between the anode and cathode for not only physically separating the anode and cathode, but also providing the channel that allows the cation and anion in the electrolyte to pass through. The membrane 1 includes a base material 11 and a glued fixture 12. In this embodiment, the thickness of the membrane 1 is about 32µm, and in practice, it is preferably about 12-50µm.

The base material 11 has a plurality of pores. In this case, the base material 11 is selected from a fiber fabric film, a blended fabric film and a non-fabric film, which are made of PET, PI, PP, PE, or nylon polymer.

The glued fixture 12 has a polymer material 121 and a plurality of inorganic materials 122. The polymer material 121 can be PFA, PVDF, PMMA, PC, PP, PE, PS, other resin particle micro-powder, or their combinations. The inorganic materials 122 can be aluminum oxide micro-powder, silicon oxide micro-powder, zirconium oxide micro-powder, magnesium oxide micro-powder, calcium oxide micro-powder, lithium oxide micro-powder, quartz, zircon flour, fused alumina powder, olivine powder, other metal or nonmetal oxide micro-powder, or their combinations. Herein, the diameter of the inorganic material 122 is between 0.1 nm and 5 µm.

The polymer material 121 and a solvent form an emulsion solution. In the emulsion solution, the polymer material 121 is ranged from 0.5% to 40%. Besides, it is also possible to add other additives into the emulsion solution for enhancing the properties of the emulsion solution depending on different manufacturers or products. After that, the inorganic material 122 is added into the emulsion solution so as to form homogeneous slurry, which is the glued fixture 12. In the glued fixture 12, the inorganic material 122 is ranged from 0.1 % to 60%. The glued fixture 12 containing the inorganic material 122 is embedded into the pores of the base material 11 by immersing, coating, printing, compressing, or casting, so that the base material 11 can be configured with a plurality of microporous structures. Accordingly, the membrane of the invention has good porosity that can establish a channel with almost no resistance for the anions and cations in the electrolyte.

The above description discloses the structure of the membrane of the present invention, and the manufacturing processes of the membrane will be described hereinafter with reference to FIG. 1.

The first step is to add at least one polymer material to form a colloid. In this embodiment, resins PVDF2801 and PVDF900 are mixed to form a colloid. In the colloid, the resins PVDF2801 and PVDF900 are mixed in the ratio of 1:3. Then, the colloid is dissolved in a solvent to form an emulsion solution. In this embodiment, the solvent is, for example, NMP (n-methyl pyrrolidone). The polymer material is about 0.5-40% of the emulsion solution. In this embodiment, the colloid is about 10% of the emulsion solution.

The second step is to add an inorganic material into the emulsion solution so as to form a glued fixture. In this embodiment, the inorganic material is, for example but not limited to, aluminum oxide micro-powder. For example, the aluminum oxide micro-powder is about 40% of the glued fixture. In other embodiments, the inorganic material can be about 0.1 % to 60% of the glued fixture.

The final step is to embed the glued fixture containing the inorganic material into the base material by immersing, coating, printing, compressing, or casting. The base material of this embodiment is, for example but not limited to, a PET non-fabric film. Accordingly, the glued fixture can be filled into the base material and the pores so as to form a plurality of microporous structures in the base material.

To be noted, the diameter of the original pores of the base material is about 1-100µm, but the diameter of the microporous structures made by the above steps becomes about 0.1-2µm. Besides, the density of the base material is increased from 30∼60 g/m² to 70∼120 g/m².

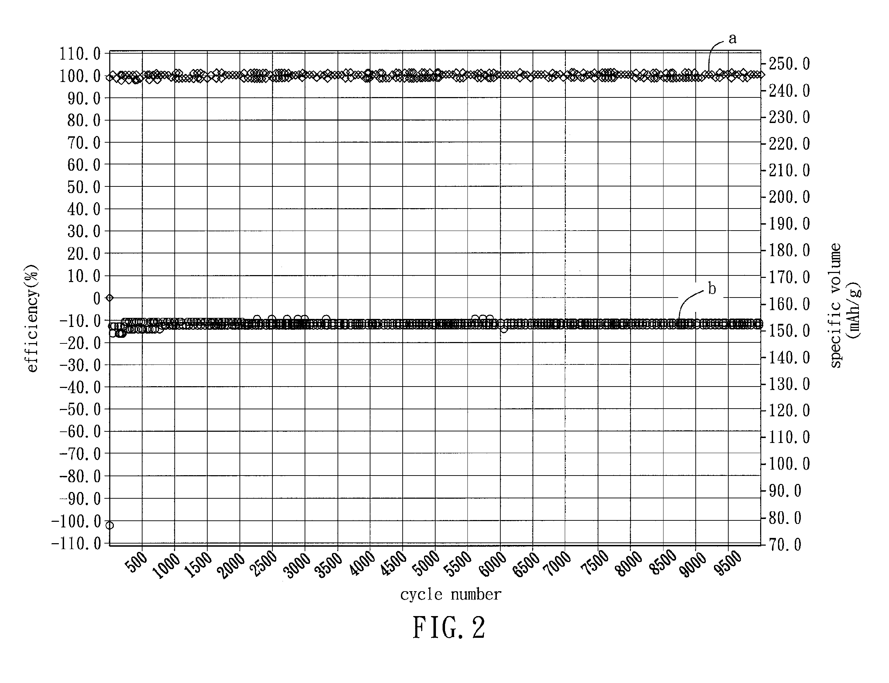

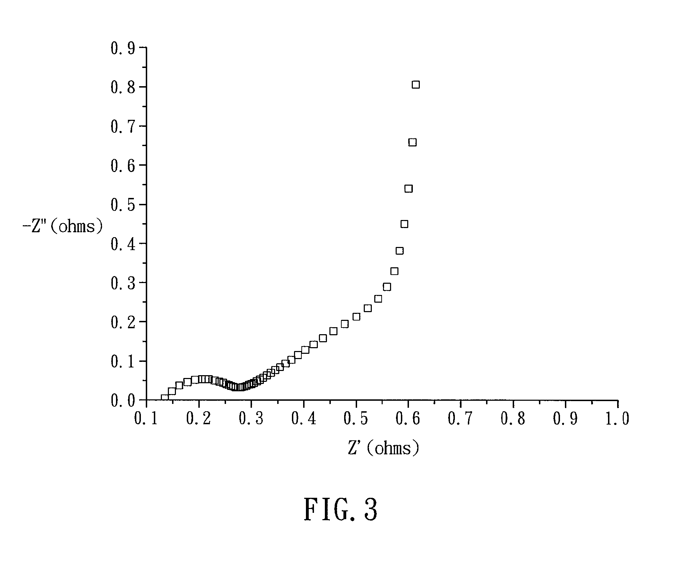

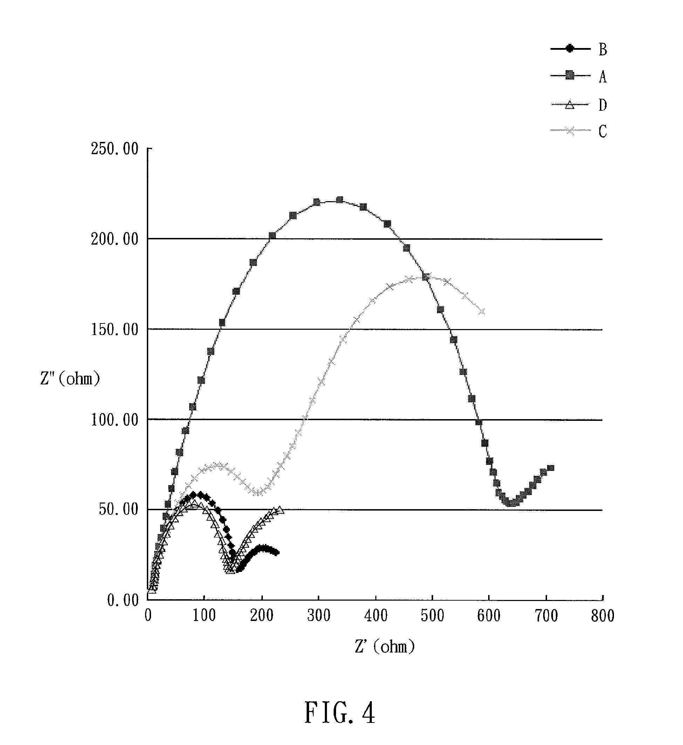

The characteristic curves of the supercapacitor containing the above-mentioned membrane of the invention will be described hereinafter with reference to FIGS. 2 to 4. Herein, FIG. 2 is a graph showing the charging cycle test result of a 1.3F button supercapacitor, FIG. 3 is an AC resistance diagram of a 1.3F button supercapacitor, and FIG. 4 is a blank AC resistance diagram of different membranes in different electrolytes.

In FIG. 2, a represents the cycle efficiency, and b represents the cycle capacity. As shown in FIG. 2, after 10,000 cycles, the cycle efficiency of the 1.3F button active carbon supercapacitor is still larger than 99%, and the capacity thereof is larger than 35F/g. FIG. 3 shows the AC resistance of the 1.3F button active carbon supercapacitor, the AC equivalent serial resistance is smaller than 0.1 ohm. FIG. 4 shows the comparison curves of the blank AC resistances, wherein the counter electrode is made of smooth aluminum plate. The diameter of the membrane used in this test is 18nm. Herein, the curve A represents the AC resistance as the membrane of the invention is applied to the Et4NBF4/AN electrolyte. The curve B represents the AC resistance as the membrane of the invention is applied to the Et4NBF4/AN electrolyte, wherein the membrane is a non-fabric film base material embedded with inorganic and polymer materials and processed by organic material to form pores. The curve C represents the AC resistance as the membrane of the invention is applied to the LiPF6/PC electrolyte. The curve D represents the AC resistance as the membrane of the invention is applied to the LiPF6/PC electrolyte, wherein the membrane is a non-fabric film base material embedded with inorganic and polymer materials and processed by organic material to form pores.

To sum up, in the membrane of the invention, the glued fixture containing inorganic material is embedded into the pores of the base material by immersing or coating, so that the base material can be configured with a plurality of compact microporous structures. Compared with the conventional art, the membrane of the invention has lower manufacturing cost and better porosity. When the membrane is applied to a supercapacitor or an electric double layer capacitor, it is possible to provide a channel with almost no resistance for the anions and cations in the electrolyte and improve the thermo-stability and flame retardance of the membrane. In addition, the membrane embedded by the inorganic material has higher safety and can provide superior dielectric property to the supercapacitor or electric double layer capacitor.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A membrane comprising:
a base material having a plurality of pores, wherein the base material is selected from a fiber fabric film, a blended fabric film and a non-fabric film; and
a glued fixture having a polymer material and a plurality of inorganic materials;
wherein, the inorganic materials are glued on the pores by the polymer material to form a plurality of microporous structures.

2. The membrane of claim 1, wherein the inorganic material is selected from aluminum oxide micro-powder, silicon oxide micro-powder, zirconium oxide micro-powder, magnesium oxide micro-powder, calcium oxide micro-powder, lithium oxide micro-powder, and their combinations.

3. The membrane of claim 1, wherein the polymer material is selected from PFA, PVDF, PMMA, PC, PP, PE, PS, and their combinations.

4. The membrane of claim 1, wherein the material of the base material comprises PET, PI, PP, PE, or nylon polymer.

5. The membrane of claim 1, wherein the diameter of the inorganic material is between 0.1 nm and 5 µm.

6. The membrane of claim 1, wherein the polymer material and a solvent form an emulsion solution.

7. The membrane of claim 6, wherein the polymer material is 0.5% to 40% of the emulsion solution.

8. The membrane of claim 1, wherein the inorganic material is 0.1% to 60% of the glued fixture.

9. The membrane of claim 1, wherein the glued fixture is embedded into the base material by immersing, coating, printing, compressing, or casting.

10. The membrane of claim 1, wherein the membrane is applied to a supercapacitor, an aluminum electrolytic capacitor, an electric double layer capacitor, or an electric double layer hybrid supercapacitor.
